# EUROPEAN PATENT APPLICATION

(11) **EP 0 998 101 A2**
(43) Date of publication of application: **03.05.2000**
(21) Application number: 99120907.3
(22) Date of filing: 29.10.1999
(51) Int. Cl.: H04L 29/12, H04L 12/28, H04L 29/06

(54) **Wireless server, method of connecting terminal device and server, and recording medium thereof**

(30) Priority: 29.10.1998 JP 30923298
(71) Applicant: Mitsubishi Materials Corporation, Chiyoda-ku, Tokyo 100-004 (JP)
(72) Inventor: Tari, Kazuyoshi, Omiya-shi, Saitama 330-0835 (JP); Unoki Hiroyuki, Omiya-shi, Saitama 330-0835 (JP); Nagira Tumoru, Omiya-shi, Saitama 330-0835 (JP)
(74) Representative: HOFFMANN - EITLE

(57) **Abstract**

Even when the mobile terminal devices (3-1, 3-2) utilizing the radio waves move into the service areas in the different networks (networks 1, 2), it is enable to utilize the functional servers (4-1, 4-2, 5-1, 5-2, 6-1, 6-2) such as the DNS servers (4-1, 4-2), the HTTP servers (5-1, 5-2), and the likes in the networks (networks 1, 2) without changing the establishment on the mobile terminal device sides. The wireless servers (1-1, 1-2) of the present invention convert the destination addresses included in the service request to the functional servers (4-1, 4-2, 5-1, 5-2, 6-1, 6-2) to the addresses of the functional servers (4-1, 4-2, 5-1, 5-2, 6-1, 6-2) having the identical functions as the functional servers (4-1, 4-2, 5-1, 5-2, 6-1, 6-2), that are connected to the wireless servers (1-1, 1-2), and further convert the transmitting side addresses to the addresses corresponding to the networks (networks 1, 2) to which the wireless servers (1-1, 1-2) belong.

## Description

### BACKGROUND OF THE INVENTION

### 1. Field of the Invention

The present invention relates to a sever which is capable of being connected to an Internet, comprising a procedure when connecting to a server that belongs to a network other than a network to which a movable terminal device belongs, in a radio communication system that utilizes a network such as an Internet and the likes.

### 2. Description of the Related Art

Recently, there are increasing needs for a mobile computing. This mobile computing is the one in which data send-receive is implemented by connecting a computer to an Internet, using a mobile telephone line and the likes. Since using a line of a mobile telephone as a line to be used, it has a feature that enables a communication from a movable place such as an automobile and the likes.

However, in a conventional communication equipment, since it uses a communication protocol for use in a point-to-point communication, there is a problem such that a movable terminal device can not be communicated when moving over the networks. Further, since it uses a telephone line, there are problems such that it takes a time for making a connection, and/or it can not be used when the lines are busy because of a large number of users.

Moreover, it is a problem that an address and the likes of a server, which are to be accessed, would be different according to a movement of the terminal device. An establishment of a server to which a terminal device accesses is fixed for each of the terminal devices. However, when utilizing the server in the network to which the terminal device has moved, it can not be utilized with a fixed establishment.

### SUMMARY OF THE INVENTION

Accordingly, the present invention is made in a view of the above mentioned point, and it is an object of the present invention to provide a wireless server which is capable of utilizing a server to which it is moved, as arranging the server designated by the terminal device to correspond to the various kinds of servers in the network to which the terminal device is connected, without changing an establishment on the terminal device side, when the movable terminal device is moved over the networks without using a telephone line.

The above-mentioned object can be achieved by the wireless server according to the present invention. The wireless server of the present invention is that in a radio communication system constituting of a plurality of wireless servers, each of which is capable of connecting to an Internet, at least one kind of functional servers connected to the wireless servers, each of which is capable of connecting to the Internet, a base radio device connected to each of the wireless servers, which performs a communication by a radio wave, a mobile radio device which performs a communication with the base radio device by a radio wave, and a terminal device connected to the mobile radio device, and in an area that is capable of a radio communication of a radio base station connected to the wireless servers, the radio communication system enabling the terminal device to be connected to the Internet by performing a communication with the mobile radio device, each of the wireless servers include an address converting means, from a terminal device under a management of other wireless server, to a service request for the functional server connected to the other wireless server, for converting a destination address contained in the service request to an address of a functional server connected to the wireless server, which has the same function as the functional server, as well as for converting an address of the terminal device to an address corresponding to its own network.

Further, the wireless server of the present invention includes a conversion table generating means for generating an address conversion table which obtains an address information of a functional server in other network to which the terminal device belongs, and makes an address information of a functional server in its own network to which the wireless server belongs to correspond therewith, and makes the address of the terminal device in its own network and the address of the terminal device in other network to correspond each other, and wherein, the address converting means performs an address conversion of the destination address and the transmitting site address of the information sent from the terminal device using the address conversion table.

A method of connecting between a terminal and a server in the wireless server according to the present invention includes the steps of determining an assigned network of the terminal device, detecting an assigned network of the terminal device, obtaining an address information, and performing an address conversion that, by utilizing the address information, converts a destination address of the information sent from the terminal device to an address of a functional server connected to the wireless server, which has the same function as the functional server belonging to the assigned network of the terminal device, as well as converts an address of the terminal device to an address corresponding to its own network.

The invention according to the claim 4 is that in a computer readable recording media into which a program of connecting between a terminal and a server in a wireless server is recorded, the program making a computer to perform the steps of determining an assigned network of the terminal device, detecting an assigned network of the terminal device, obtaining an address information, and performing an address conversion that, by utilizing the address information, converts a destination address of the information sent from the terminal device to an address of a functional server connected to the wireless server, which has the same function as the functional server belonging to the assigned network of the terminal device, as well as converts an address of the terminal device to an address corresponding to its own network.

### BRIEF DESCRIPTION OF THE DRAWINGS

Further objects and advantages of the invention can be more fully understood from the following detailed description taken in conjunction with the accompanying drawings in which:
Fig. 1 is a block diagram showing a configuration of a wireless server according to one embodiment of the present invention;
Fig. 2 is a diagram showing one exploited embodiment of the wireless server according to the present invention;
Fig. 3 is an operation flowchart of the wireless server that is one embodiment according to the present invention; and
Fig. 4 is a diagram showing one example of an address conversion table.

### DESCRIPTION OF THE PREFERRED EMBODIMENTS

In the following, the embodiments of the present invention will be described with reference to the accompanying drawings.

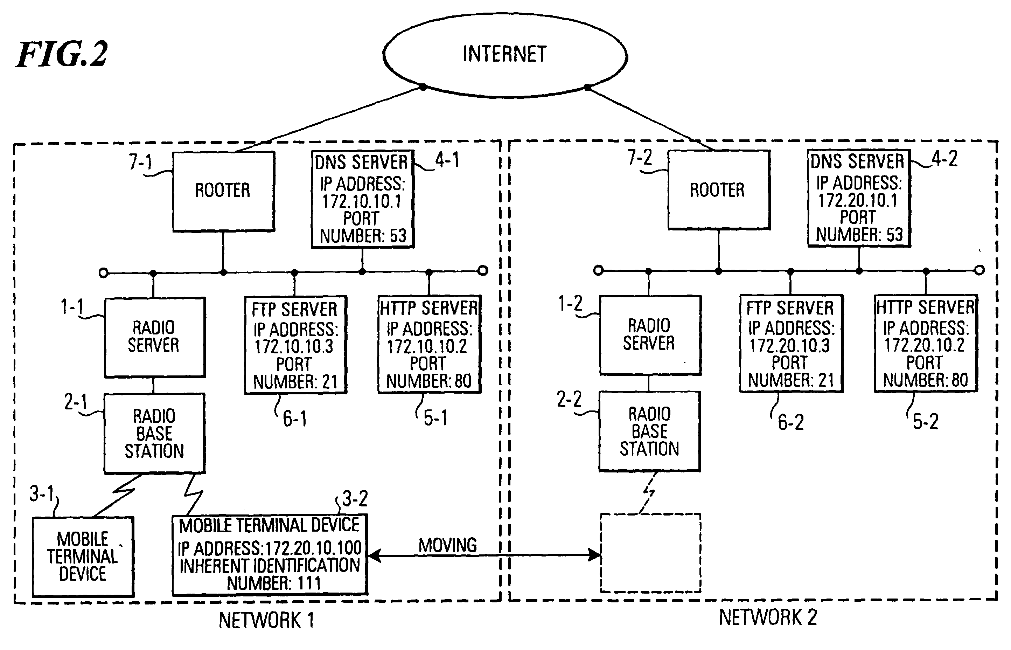

Fig. 2 shows one exploited embodiment of the present invention. In the present exploited embodiment, two networks n (n = 1, 2) are connected to an Internet through the rooter7-n (n = 1, 2). The wireless server 1-n (n = 1, 2) according to trio present invention are placed in and connected to the networks n (n = 1, 2). Further, various kinds of servers such as the DNS servers 4-n (n = 1, 2) as the functional servers, the HTTP servers 5-n (n = 1, 2), the FTP servers 6-n (n = 1, 2) and the likes are connected to each of the networks n (n = 1, 2). Further, in the present exploited embodiment the functional servers represent these various kinds of servers. Moreover, the mobile terminal device 3-1 belongs to the network 1, and is connected to the wireless server through the radio base station 2-1 with a radio communication. In this figure, further, it shows a state in which the mobile terminal device 3-2 that belongs to the network 2 moves to a radio communication area of the network 1, and is connected to the wireless server 1-1 that belongs to the network 1. Herein, two networks 1, 2 are illustrated, but it is not limited to two. Furthermore, for the mobile terminal devices 3-n (n = 1, 2,...) and for the various kinds of servers, the numbers and the kinds thereof are not limited.

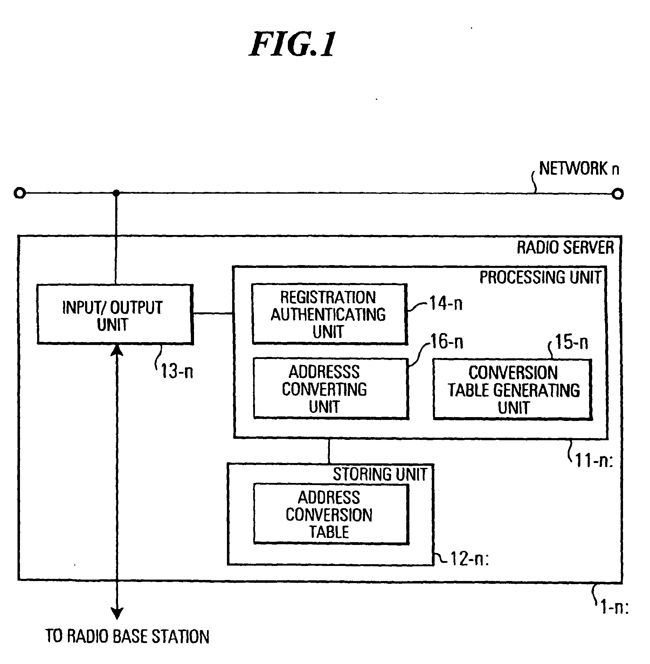

Fig. 1 is a block diagram showing a configuration of a wireless server according to one embodiment of the present invention. In the present embodiment, it is described as a plurality of wireless servers 1-n (n = 1, 2, ...) to be connected to the Internet and to be utilized. Further, it is assumed that a TCP/IP is used as a communication protocol, but it is not limited thereto.

The wireless servers 1-n in the present embodiment are constituted of processing units 11-n comprising registration authenticating units 14-n, conversion table generating units 15-n, and address converting units 16-n, storing units 12-n for storing data including the address conversion table, and input/output units 13-n connected to the Internet and the radio base station 2-n for performing input/output of the data.

The registration authenticating units 14-n determine whether or not the mobile terminal devices 3-n belong to its own network or to other network, according to the registration authentication requests to the wireless servers 1-n transmitted from the mobile terminal devices 3-n. Herein, if it is determined that they belong to other network, the registration authenticating unit 14-n further,
(1) In a case that the mobile terminal devices 3-n do not hold the information such as their own IP addresses and the IP addresses and port numbers of the various kinds of servers, and the likes: Each data is received by requesting the IP addresses of the mobile terminal devices 3-n, the IP addresses and port numbers of the various kinds of servers such as the HTTP server, the DNS server, the mail server and the likes as the functional servers, to the wireless servers 1-n' (in the following, it is referred to as the home wireless servers) of other network to which the mobile terminal devices 3-n belong.
(2) in a case that the mobile terminal devices 3-n hold the information such as their own IP addresses and the IP addresses and port numbers of the various kinds of servers, and the likes: Each data of the IP addresses of the mobile terminal devices 3-n, the IP addresses and port numbers of the various kinds of servers such as the HTTP server, the DNS server, the mail server and the likes is received from the mobile terminal device 3-n.

The conversion table generating units 15-n generates the address conversion table based on each data of which the registration authenticating units 14-n have received from the home wireless servers 1-n' or the mobile terminal devices 3-n. This address conversion table makes the IP addresses of the various kinds of servers in the networks to which the home wireless servers belong to correspond to the IP addresses of the various kinds of servers that belong to their own networks, and makes the IP addresses of the mobile terminal devices 3-n in their own networks and the IP addresses of the mobile terminal devices 3-n in other networks to which the mobile terminal devices 3-n belong to correspond each other.

The address converting units 16-n convert the IP addresses and the port numbers of the various kinds of servers and the mobile terminal devices 3-n so as to match with their own networks by referring to the address conversion table, for the service requests to the various kinds of servers from the mobile terminal devices 3-n, when the mobile terminal devices 3-n do not belong to their own networks. Then, it make possible to access to the servers that belong to their own networks and correspond thereto, for the mobile terminal devices 3-n.

Further, it is assumed that there is at least one wireless server 1-n, in each of the networks n.

Moreover, the processing units 11-n are constituted of memories and CPU (Central Processing Unit)s and the likes, and the functions thereof are implemented by loading the programs (not shown) for implementing the respective functions of the processing units 11-n into the memories and performing them. Further, the memory unit 12-n are constituted of non-volatile memory devices such as EEPROM (Electric Erasable Programmable Read Only Memory)s, hard-disks, optical magnetic disks and the likes.

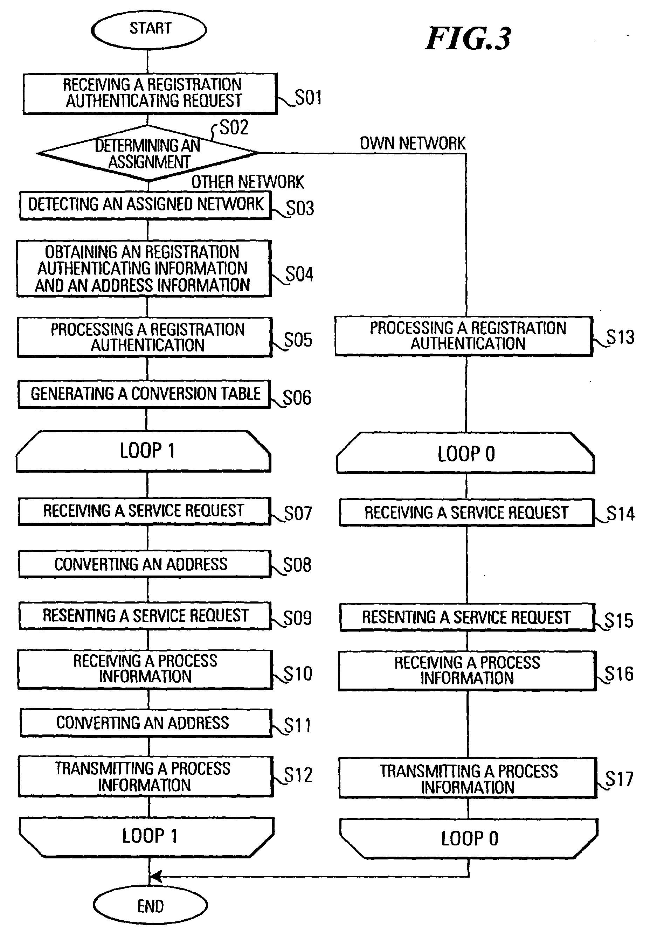

In the following, the operations of the wireless servers 1-1 of the present embodiment, constituted as described above, and the mobile terminal devices 3-2 that are constituted by the combination of the mobile wireless machines and the terminal devices, will be described with reference to Figs. 2 and 3. Fig. 3 is an operation flowchart of the wireless servers 1-n (n = 1, 2, ...).

Further, the mobile terminal device 3-2 is managed by the home wireless server 1-2. Moreover, as the peripheral equipment or the integrated device, the input device, display device and the likes (not shown) are connected to the mobile terminal devices 3-n. Herein, as the input device, it refers to an input device such as a keyboard, a mouse, a touch-panel and the likes. As the display device, it refers to a CRT (Cathode Ray Tube) and a liquid crystal display device and the likes.

At first, the mobile terminal device 3-2 accesses a wireless server 1-1 through the radio base station 2-1 with a radio communication, and performs a registration authenticating request with a registration authenticating information for the wireless server 1-1, and then the wireless server 1-1 receives this registration authenticating request (step S01). At this moment the mobile terminal device 3-2 does not recognize to which network it is accessing. Further, as the registration authenticating information, for example, an inherent identifier that is uniquely defined and the likes are transmitted to the mobile terminal device 3-2.

When the wireless server 1-1 receives a registration authenticating information transmitted from the mobile terminal device 3-2, the registration authenticating unit 14-1 determines whether or not the mobile terminal device 3-2 belongs to the network 1 that is its own network (i.e., whether or not it is under the management of the wireless server 1-1) (step S02). Further, it is assumed that each wireless server holds the network related information (the IP addresses, port numbers and the likes of the wireless servers 1-n (n = 1, 2, ...) that belong to the respective networks) corresponding to an identifiers of which the respective mobile terminal devices 3-n have.

Since the mobile terminal device 3-2 belongs to the network 2, it is determined that the registration authenticating unit 14-1may be a device not belonging to its own network, as well as it is figured out the network 2 to which the mobile terminal device 3-2 belongs according to the network related information (step S03).

Then, the registration authenticating unit 14-1 accesses to the home wireless server 1-2, and receives the registration authenticating information and the IP address of the mobile terminal device 3-2 and the IP addresses and port numbers of the various kinds of servers that belong to the network 2 (step S04).

The registration authenticating unit 14-1 performs a registration authenticating process using the registration authenticating information of the mobile terminal device 3-2 obtained from the home wireless server 1-2 (step S05). If it is determined that an access by the mobile terminal device 3-2 is proper, with this registration authenticating process, a connection of the mobile terminal device 3-2 and the wireless server 1-1 is established. Further, the registration authenticating process to be performed herein is defined separately. As one example, the determination of the registration- authentication may be performed based the identifiers inherent to the mobile terminal devices 3-n included in the registration authenticating information.

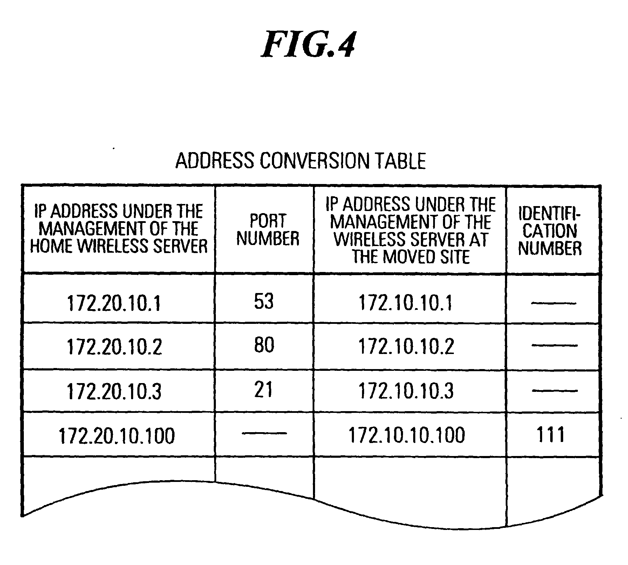

In the following, the address converting unit 16-1 generates the address conversion table that makes the IP address of the mobile terminal device 3-2 received from the home wireless server 1-2, the IP addresses and port numbers of the various kinds of servers such as the DNS server, the FTP server, the HTTP server that belong to the network 2, and the IP addresses and port numbers of the various kinds of servers such as the DNS server, the FTP server, the HTTP server that belong to the network 1 to correspond each other (step S06). Further, one example of the address conversion table is shown in Fig. 4. In this example, it is constituted of the IP addresses under the management of the home wireless server, the port numbers, the IP addresses under the management of the wireless server at the moved site, and the respective fields of the identification numbers as the identifiers.

Then, the wireless server 1-1 receives the request of services to the various kinds of servers, that is sent by the mobile terminal device 3-2 through the radio base station 2-1 (step S07). At this moment, as similar to the case that the mobile terminal device 3-2 accesses in the network 2, the requests corresponding to the DNS server 4-2, the HTTP server 5-2, the FTP server 6-2 and the likes are sent.

Then, the address converting unit 6-1 converts, in the network 1, the IP addresses of the servers at the requested site to the IP addresses of the DNS server 4-1, the HTTP server 5-1, the FTP server 6-1 and the likes that correspond to the respective servers in the network 2, based on the address conversion table stored in the storing unit 2-1, and sets them to be the destination addresses. Moreover, the address converting unit 6-1 converts the IP address of the mobile terminal device 3-2 to the address corresponding to the network 1, and sets it to be a transmitting site address (step S08). Further, also sending the required functional information (HTTP, DNS, FTP, etc.) from the mobile terminal device 3-2 since there would be the case that the port numbers are defined redundantly, the address converting unit 6-1 may be deal with the IP addresses of the servers based on this functional information.

Then, the service request from the mobile terminal device 3-2 including the IP addresses of the servers in which the address conversions have been done and the IP address of the mobile terminal device 3-2, are transmitted to the server in the network 1, that has the same function as the requested site (step S09).

Then, the server that received the service request returns the response including the process information resulted from having performed the process according to the request, the IP address of the server as the transmitting site address, and the IP address of the mobile terminal device 3-2 as the destination address. The wireless server 1-1 receives this response (step S10).

The address converting unit 3-1 converts the IP address of the server that is to be the transmitting site address during the response from the server, to the IP address of the corresponding server in the network 2 based on the address conversion table. Further, it converts the IP address of the mobile terminal device 3-2 to the IP address in the network 2 (step S11).

Then, the wireless server 1-1 transmits the process information to the mobile terminal device 3-2 through the radio base station 2-1 (step S12).

Hereafter, repeating the loop 1, but the process will be terminated at a time when the mobile terminal device 3-2 disconnects from the wireless server 1-1.

In the following, it will describe a process in a case of which the mobile terminal device 3-1 belonging to the network 1 accesses to the wireless server 1-1 through the raid base station 2-1 with a radio communication.

The mobile terminal device 3-1 performs a registration authenticating request with a registration authenticating information for the wireless server 1-1, and the wireless server 1-1 receives this registration authenticating request (step S01). Further, as the registration authenticating information, an identifier inherent to the mobile terminal device 3-1 will be transmitted, for example.

If the wireless server 1-1 receives the registration authenticating information transmitted from the mobile terminal device 3-1, the registration authenticating unit 14-1 determines whether or not the mobile terminal device 3-2 belongs to the network 1 that is its own network (i.e., whether or not it is under the management of the wireless server 1-1) (step S02).

Since the mobile terminal device 3-1 belongs to the network 1, it is determined that the registration authenticating unit 14-1 is a device belonging to its own network, and the registration authenticating unit 14-1 performs the registration authenticating process using the registration authenticating information obtained from the mobile terminal device 3-1 (step S13). According to this registration authenticating process, if it is determined that the access by the mobile terminal device 3-1 is proper, a connection of the mobile terminal device 3-1 and the wireless server 1-1 will be established.

Next, the wireless server 1-1 receives the request of services to the various kinds of servers sent by the mobile terminal device 3-1 through the radio base station 2-1 (step S14).

Then, the service request from the mobile terminal device 3-1, that includes the IP addresses of the server receiving the requests from the mobile terminal device 3-1 and the IP address of the mobile terminal device 3-1 is transmitted to the server at the requested site (step S15).

Then, the server that received the service request returns the response including the process information resulted from haying performed the process according to the request, the IP address of the server as the transmitting site address, and the IP address of the mobile terminal device 3-1 as the destination address. The wireless sewer 1-1 receives this response (step S16).

Then, the wireless server 1-1 transmits the process information to the mobile terminal device 3-1 through the radio base station 2-1 with the radio wave (step S17).

Hereafter, repeating the loop 1, but the process will be terminated at a time when the mobile terminal device 3-2 disconnects from the wireless server 1-1.

In the above, it describes the case in which the mobile terminal device 3-1 does not hold the information of its own IP address and the IP addresses and port numbers of the various kinds of servers and the likes. Further, if it is the case in which the mobile terminal device 3-1 holds the information of its own IP address and the IP addresses and port numbers of the various kinds of servers and the likes, in the step S01 causing the above-mentioned respective information to be included in the registration authenticating information that is contained in the registration authenticating request received by the wireless server 1-1, and the address conversion table may be generated on a basis of these information.

As described above, the wireless server 1-1 converts the IP addresses that are accompanied with the request to the various servers belonging to the network 2 sent from the mobile terminal device 3-2, to the IP addresses of the various kinds of servers corresponding to the network 1, thereby resenting the request. As a result, the mobile terminal device 3-2 is enable to access to a server in the network 1, which have the same function as a server belonging to the network 2. Therefore, the mobile terminal device 3-2 is enable to receive the service of the servers with the same function in the different networks, without changing the environmental establishment in the network 2.

Further, the present invention may utilize a LAN or a network by a dial pick-up, besides the Internet.

Moreover, a connection between the terminal and server may be implemented by storing a program for implementing a connection method between the terminal and server of the present invention into a computer readable recording media, and by making the program stored in this recording media to be read into a computer system and by performing it.

That is, this program causes the computer to implement a function of determining the assigned networks of the mobile terminal devices, a function of detecting the assigned networks the mobile terminal devices, a function of obtaining the address information, and a function of performing an address conversion for converting the destination addresses of the information sent from the mobile terminal devices utilizing the address information to the addresses of the functional servers being connected to the wireless servers to which the mobile terminal devices are connected, as well as for converting the addresses of the mobile terminal devices to the addresses corresponding to their own networks, that is the same function as the functional servers belonging to the assigned networks of the mobile terminal devices.

Further, from the address information obtained, having a function for generating the address conversion table that causes the addresses of the servers with the same functions belonging to its own networks and other networks to correspond, and causes the addresses of the mobile terminal devices in its own networks and other networks to correspond, it causes the computer to implement a function for implementing an address conversion, using the address conversion table, of the destination address and the transmitting site address of the information sent from the mobile terminal device.

Further, it is assumed herein that "the computer system" includes an OS (Operating System), and hard wares such as the peripheral equipment and the likes. Moreover, "the computer readable recording media" refers to a transportable media such as a floppy disk, a magneto-optical disk, a ROM (Read Only Memory), a CD-ROM and the likes, and a storage device such as a hard disk and the likes, that is installed in the computer system. Furthermore, it is assumed that "the computer readable recording media" includes the ones that hold a program dynamically for a short period of time, such as a communication line in case of transmitting the program through a network such as the Internet, and the communication line such as a telephone line, and the ones that hold the program for a certain period of time, such as a volatile memory at an inside of the computer system that becomes a server or a client in that case. Further, the above-mentioned program may be the one for implementing a portion of the functions described above, and moreover, it may be the one enabling to implement the functions described above by a combination with a program that has already been recorded in the computer system.

As described above in details, according to the present invention, for the service request to the functional servers from the terminal devices belonging to the different networks, the wireless servers convert the destination addresses to the addresses of the functional servers with the identical functions in the networks to which the wireless servers having received the service request belong, and further convert the transmitting site addresses as to correspond to its own networks. As a result, it is not required to change the establishment on the terminal device side, and further it is enable to enjoy the equivalent service from the functional servers in the different networks even if the terminal devices move among the multiple networks.

Further, according to the present invention, the address conversion table that makes the address information of the functional servers in the networks to which the terminal devices belong and the address information of the functional servers in the networks to which the wireless servers belong to correspond each other, and further makes the addresses of the terminal devices in two networks to correspond each other, is generated, and based on this address conversion table the destination addresses and the transmitting side addresses are converted. As a result, the resent of the service request to the functional servers accompanying with the address conversion can be made much faster.

The invention may be embodied in other specific forms without departing from the spirit or essential characteristics thereof. The present embodiments are therefore to be considered in all respects as illustrative and not restrictive, the scope of the invention being indicated by the appended claims rather than by foregoing description and all changes which come within the meaning and range of equivalency of the claims are therefore intended to be embraced therein.

## Claims

1. In a radio communication system constituting of a plurality of wireless servers (1-1, 1-2), each of which is capable of connecting to an Internet, at least one kind of functional servers (4-1, 4-2, 5-1, 5-2, 6-1, 6-2) connected to said wireless, servers (1-1, 1-2), each of which is capable of connecting to the Internet, a base radio device (2-1, 2-2) connected to each of said wireless servers (1-1, 1-2), which performs a communication by a radio wave, a mobile radio device (3-1, 3-2) which performs a communication with said base radio device (2-1, 2-2) by a radio wave, and a terminal device (7-1, 7-2) connected to said mobile radio device (3-1, 3-2), and in an area that is capable of a radio communication of a radio base station (2-1, 2-2) connected to said wireless servers (1-1, 1-2), said radio communication system enabling said terminal device (7-1, 7-2) to be connected to the Internet by performing a communication with said mobile radio device (3-1, 3-2), each of said wireless servers (1-1, 1-2) comprising:
an address converting means (16-n), from a terminal device (7-2) under a management of other wireless server (1-2), to a service request for said functional server (4-2, 5-2, 6-2) connected to said other wireless server (1-2), for converting a destination address contained in said service request to an address of a functional server (4-1, 5-1, 6-1) connected to said wireless server (1-1), which has the same function as said functional server (4-2, 5-2, 6-2), as well as for converting an address of said terminal device (7-2) to an address corresponding to its own network (network 2).

2. A wireless server (1-1, 1-2) according to claim 1, further comprising a conversion table generating means (15-n) tor generating an address conversion table which obtains an address information of a functional server (4-2, 5-2, 6-2) in other network (network 2) to which said terminal device (7-2) belongs, and makes an address information of a functional server (4-1, 5-1, 6-1) in its own network (network 1) to which said wireless server (1-1) belongs to correspond therewith, and makes the address of said terminal device (7-1) in its own network (network 1) and the address of said terminal device (7-2) in other network (network 2) to correspond each other, and
wherein, said address converting mean; (16-n) performs an address conversion of the destination address and the transmitting site address of the information sent from said terminal device (7-1, 7-2) using said address conversion table.

3. A method of connecting between a terminal and a server in said wireless server, comprising the steps of:
determining an assigned network of said terminal device (S02);
detecting an assigned network of said terminal device (S03);
obtaining an address information (S04); and
performing an address conversion (S05 -S12) that, by utilizing said address information, converts a destination address of the information sent from said terminal device to an address of a functional server connected to said wireless server, which has the same function as the functional server belonging to the assigned network of said terminal device, as well as converts an address of said terminal device to an address corresponding to its own network.

4. In a computer readable recording media into which a program of connecting between a terminal and a server in a wireless server is recorded, said program making a computer to perform the steps of:
determining an assigned network of said terminal device (S02);
detecting an assigned network of said terminal device (S03);
obtaining an address information (S04); and
performing an address conversion (S05 - S12) that, by utilizing said address information, converts a destination address of the information sent from said terminal device to an address of a functional server connected to said wireless server, which has the same function as the functional server belonging to the assigned network of said terminal device, as well as converts an address of said terminal device to an address corresponding to its own network.
